(19) Europäisches Patentamt

European Patent Office

Office européen des brevets

(11) **EP 0 941 965 A1**

(12) **EUROPÄISCHE PATENTANMELDUNG**

(43) Veröffentlichungstag:
**15.09.1999 Patentblatt 1999/37**

(51) Int. Cl.⁶: **C01C 3/02**

(21) Anmeldenummer: **99103461.2**

(22) Anmeldetag: **23.02.1999**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **11.03.1998 DE 19810484**

(71) Anmelder:
**Degussa-Hüls Aktiengesellschaft
60287 Frankfurt am Main (DE)**

(72) Erfinder:
• **von Hippel, Lukas, Dr.
63755 Alzenau (DE)**
• **Arntz, Dietrich, Dr.
Mobile, AL 36695 (US)**
• **Vanheertum, Rudolf, Dr.
63796 Kahl (DE)**
• **Sauer, Manfred, Dr.
63517 Rodenbach (DE)**
• **Kuttruf, Bernd
63863 Eschau (DE)**

(54) **Verfahren zur Herstellung von Blausäure**

(57) Offenbart wird ein Verfahren zur Herstellung von Blausäure durch Umsetzen der Eduktgase Methan, Ammoniak und Sauerstoff an einem Katalysator bei erhöhter Temperatur, welches sich dadurch auszeichnet, daß man die Reaktion im wesentlichen autotherm unter Erhalt von Blausäure, Wasserstoff und Wasser führt. Die für die eigentliche Reaktion am Katalysator erforderlichen hohen Temperaturen werden bevorzugt dadurch gehalten, daß man den Sauerstoffgehalt leicht über das stöchiometrische erforderliche Maß von 1/2 Mol $O_2$ pro 1 Mol erzeugter Blausäure anhebt. Im Gegensatz zum Andrussow-Verfahren ist der Sauerstoffgehalt der Eduktgase immer geringerer als 3/2 Mol $O_2$ pro 1 Mol erzeugter Blausäure.

HCN, $H_2O$ $H_2$    HCN, $H_2O$ $H_2$

$CH_4$, $NH_3$, $O_2$

**Figur 1**

EP 0 941 965 A1

**Beschreibung**

Die Erfindung betrifft die Herstellung von Blausäure. Insbesondere richtet sich die Erfindung auf ein neuartiges Verfahren zur Herstellung von Blausäure durch Umsetzen der Eduktgase Methan, Ammoniak und Sauerstoff an einem Katalysator bei erhöhter Temperatur.

Zur Herstellung von Blausäure sind schon verschiedene technische Routen bekannt geworden.

Eine bekannte Verfahrensvariante ist das sogenannte BMA-Verfahren. Hierbei wird nach der Reaktionsgleichung:

$$CH_4 + NH_3 \rightarrow HCN + 3\,H_2 \qquad (1)$$

aus den Edukten Methan und Ammoniak in einer stark endothermen Reaktion Blausäure und Wasserstoff erhalten. Die Ammondehydrierung in Abwesenheit von Sauerstoff verlangt die Zufuhr einer großen Menge Wärme, um die Reaktion in die gewünschte Richtung zu führen. Pro erzeugtem Mol Blausäure muß zur Reaktion eine Energie von etwa 280 kJ zugeführt werden. Die zur Unterhaltung der Reaktion erforderliche Wärme wird durch indirekte Kopplung mit einem Brenngas zugeführt. Hierzu werden apparativ relativ aufwendige Reaktoren eingesetzt. Zur Isolierung der Blausäure ist das Produktgasgemisch aufzutrennen. Blausäure läßt sich aus Wasserstoff z. B. mit Wasser auswaschen.

Eine weitere bekannte Verfahrensvariante ist die Ammonoxidation von Methan (Andrussow-Verfahren). Gemäß dem Andrussow-Verfahren werden Methan, Ammoniak und Sauerstoff nach der folgenden Reaktionsgleichung zu Blausäure und Wasser umgesetzt:

$$CH_4 + NH_3 + 1{,}5\,O_2 \rightarrow HCN + 3H_2O \qquad (2)$$

Die Umsetzung ist exotherm. Pro erzeugtem Mol Blausäure wird eine Energie von 474 kJ freigesetzt.

Das Andrussow-Verfahren wird in Ullmann's Encyclopedia of Industrial Chemistry, Volume 8, Weinheim 1987, Seiten 161-162 beschrieben. Die Umsetzung erfolgt bei Atmosphärendruck an einem Platinkatalysator bei einer Temperatur von über 1000°C. Als Katalysator ist zum Beispiel der in der US-Patentschrift US 3,360,335 beschriebene Platinkatalysator geeignet. Die gebildete Blausäure muß möglichst umgehend auf Temperaturen unter 800°C abgekühlt werden, um eine thermische Zersetzung zu vermeiden. Beim Andrussow-Verfahren geschieht dies in einem Warmetauscher unter Erzeugung von Dampf, welcher im weiteren Prozeß verwendet wird. Trotz der möglichen Weiterverwendung des Wasserdampfs ist Wasser ein Abfallprodukt des Andrussow-Verfahrens. Eine Reduzierung oder Vermeidung des Produktes Wasserdampf wäre wünschenswert.

Aufgrund des Einsatzes von Produkt-Wärmetauschern ist das Andrussow-Verfahren auch apparativ recht aufwendig. Erstrebenswert wäre eine Reduzierung des apparativen Aufwandes.

Noch ein kritischer Punkt beim Andrussow-Verfahren ist bei einer Verfahrensvariante die Tatsache, daß das Eduktgasgemisch bevor es mit dem Katalysator in Kontakt tritt auf eine Temperatur erwärmt werden muß, bei der das Gasgemisch sich im Explosionsbereich befindet.

Anbetracht des hierin angegebenen und näher diskutierten Standes der Technik war es Aufgabe der Erfindung, ein Verfahren zur Herstellung von Blausäure anzugeben, welches dazu beiträgt, die im Stand der Technik vorhandenen Nachteile zu vermeiden oder zu reduzieren.

Insbesondere soll ein Verfahren zur Herstellung von Blausäure durch Umsetzen der Eduktgase Methan, Ammoniak und Sauerstoff an einem Katalysator angegeben werden, welches eine bessere Energienutzung ermöglicht.

Weiters soll die Energiebilanz des Verfahrens verbessert werden, so daß vorzugsweise keine überschüssige Wärme in Wasser gespeichert wird.

Außerdem soll die Reaktion in einfachen und kompakten, modularen Reaktoren durchführbar sein, die sich leicht zu einer größeren Anlage zusammenschalten lassen.

Gelöst werden diese, sowie weitere im einzelnen nicht genannte, sich jedoch aus den einleitenden Erörterungen des Standes der Technik ohne weiteres erschließende oder ableitbare Aufgaben durch ein Verfahren mit den Merkmalen des Anspruches 1. Vorteilhafte Verfahrensmodifikationen sind Gegenstand der auf Anspruch 1 rückbezogenen abhängigen Ansprüche.

Dadurch, daß man bei einem Verfahren zur Herstellung von Blausäure durch Umsetzung der Eduktgase Methan, Ammoniak und Sauerstoff an einem Katalysator bei erhöhter Temperatur die Reaktion im wesentlichen autotherm unter Erhalt von Blausäure, Wasserstoff und Wasser führt, gelingt es auf nicht ohne weiteres vorhersehbare Weise eine ganze Reihe von Vorteilen gegenüber dem bekannten Stand der Technik zu erzielen.

Zu den erzielbaren Vorteilen gehören unter anderem folgende Punkte:

- Gegenüber dem, gemäß dem Andrussow-Verfahren ausschließlich anfallenden Wasserdampf entsteht beim Verfahren gemäß der Erfindung eine Mischung aus dem Wertstoff Wasserstoff und dem "Abfallstoff" Wasserdampf. Wasserstoff und die darin im Vergleich zum Wasserdampf gespeicherte Energie kann sehr viel besser und variabler als Wasserdampf bzw. die darin verlorene Energie weiterverwendet werden.

- Aufgrund der Autothermie des erfindungsgemäßen Verfahrens werden keine besonderen Produktwärmetauscher benötigt. Hieraus folgt insbesondere, daß man bei den für das erfindungsgemäße Verfahren einzusetzenden Reaktoren mit einer geringeren Anzahl und weniger aufwendigen Apparaten und Aggregaten auskommen kann.

- Im Vergleich zum bekannten Stand der Technik genügt ein einziges Aggregat für die Vorwärmung der Edukte, für die Reaktorheizung und die Kühlung der Produkte.

- Durch die Variation des Sauerstoffgehaltes der Eduktgase ist eine leichte Kontrolle und Steuerung der Wärmetönung der Reaktion möglich.

- Mehrere Rohrbündel und mehrere Reaktoren können einfach zu größeren Produktionseinheiten zusammengeschaltet werden. Die entsprechenden Reaktionsrohre können beispielsweise über Sammelleitungen mit dem Eduktgasgemisch aus Methan, Ammoniak und Sauerstoff und gegebenenfalls Stickstoff versorgt werden.

Beim Verfahren gemäß der Erfindung handelt es sich um ein im wesentlichen autothermes Reaktionsverfahren. Im Rahmen der Erfindung ist unter dem Begriff "im wesentlichen autotherm" eine Reaktion zu verstehen, die in jedem Falle weniger exotherm ist als das Andrussow-Verfahren und deren Endothermie geringer ist als die des BMA-Verfahrens. Eine vollständig autotherme Reaktionsführung gelingt nicht, da durch die für die Reaktion notwendige hohe Temperatur auch bei sehr guter thermischer Isolation des Reaktors doch zu Abwärme führt. Auch kann nicht vollständig verhindert werden, daß durch den Produktstrom Energie aus dem Reaktor geführt wird. In einem im wesentlichen autothermen Verfahren muß also die Reaktion nur insoweit autotherm betrieben werden, wie notwendig ist, um die durch Leckage erzielten Energieverluste auszugleichen und die hohe Reaktortemperatur aufrecht zu halten. In zweckmäßiger und bevorzugter Abwandlung des erfindungsgemäßen Verfahrens kennzeichnet sich die Herstellung von Blausäure durch Umsetzung der Eduktgase Methan, Ammoniak und Sauerstoff an einem Katalysator bei erhöhter Temperatur dadurch, daß die Wärmetönung der Umsetzung thermische Leckagen des Reaktors kompensiert. Vorzugsweise ist $\Delta H = 0 \pm 50$ kJ/Mol, bezogen auf 1 Mol entstehende Blausäure. Weiterhin zweckmäßig ist eine Variante, deren Wärmetönung, also Reaktionsenthalpie, im Bereich von $0 \pm 30$ kJ/Mol bezogen auf 1 Mol entstehende Blausäure, ist. Ganz besonders zweckmäßig ist eine Verfahrensabwandlung, bei welcher die Reaktionswärme, d.h., die Wärmetönung der Reaktion im Bereich von $0 \pm 20$ kJ/Mol ist. Gerade im letzteren Fall ist eine annähernd absolute Autothermie der Reaktion einfach zu gewährleisten.

Im Unterschied zum bekannten BMA-Verfahren, welches ohne Zufuhr von Sauerstoff arbeitet, wird beim Verfahren gemäß der Erfindung Sauerstoff zur Oxidation von Ammoniak und Methan zugeführt. Im Unterschied zum bekannten Andrussow-Verfahren, welches stöchiometrisch mit 1,5 Mol Sauerstoff pro erzeugtem Mol-Blausäure arbeitet, wird beim Verfahren der Erfindung mit einer geringeren Menge Sauerstoff operiert.

In besonders zweckmäßiger Variante zeichnet sich das Verfahren gemäß der Erfindung dadurch aus, daß man pro Mol entstehender Blausäure zwischen 1/2 und < 3/2 Mol Sauerstoff einsetzt.

Noch eine zweckmäßige Variante des erfindungsgemäßen Verfahrens ist dadurch ausgezeichnet, daß man pro Mol entstehender Blausäure 1/2 bis 1 Mol Sauerstoff einsetzt. Ganz besonders günstig sind Sauerstoffmengen von 1/2 bis 2/3 Mol Sauerstoff pro Mol entstehender Blausäure.

Eine optimale erfindungsgemäße Verfahrensvariante ist dadurch gekennzeichnet, daß man die Umsetzung im wesentlichen gemäß der Reaktionsgleichung

$$CH_4 + NH_3 + 1/2\ O_2 \rightarrow HCN + H_2O + 2H_2$$

führt. Wie bereits oben ausgeführt muß mit einem etwas erhöhten Sauerstoffwert gearbeitet werden, um die thermischen Leckagen zu kompensieren. Dabei ist der benötigte Sauerstoffüberschuß von dem jeweiligen Zustand des Reaktors abhängig.

Nachdem das Verfahren im Idealfall durch eine Autothermie charakterisiert ist, kennzeichnet sich eine weitere günstige Verfahrensvariante dadurch, daß man die bei der Reaktion bei hohen Temperaturen in den Gasen enthaltene Wärme im indirekten Wärmetausch nach dem Gegenstromprinzip zur Erwärmung der Eduktgase auf die erforderliche Reaktionstemperatur verwendet.

Hierbei kann man in einer Variante die Eduktgase als Gasgemisch auf die erforderliche Reaktionstemperatur erwärmen, man kann aber auch in einer anderen Variante Methan und Ammoniak einerseits und Sauerstoff anderseits getrennt auf die erforderliche Reaktionstemperatur erwärmen.

Grundsätzlich geht man beim Anfahren eines erfindungsgemäß einzusetzenden Reaktors so vor, daß beispielsweise durch Verbrennung von Erdgas ($CH_4$ und Sauerstoff) das Katalysatorbett auf Temperaturen von vorzugsweise > 1000°C erwärmt wird. Alternativ dazu kann eine Erwärmung des Katalysators z.B. durch Strom erfolgen. Ebenfalls ist eine Erwärmung durch direkte oder indirekte elektrische Beheizung möglich. In einem nächsten Schritt gibt man dem Erdgas Ammoniak zu und reduziert die Sauerstoffzufuhr. Dies geschieht im deutlichen Unterschied zum ansich bekannten Andrussow-Verfahren, wo fast keine $O_2$-Reduktion in diesem Schritt stattfindet.

Insbesondere wird die vergleichsweise hohe Reaktionstemperatur von > 1000°C dadurch auf Dauer aufrechterhalten, daß man apparativ kaum Wärmeverluste nach außen hat, intensiven internen Wärmetausch zwischen Edukten und Produkten fördert und die doch gegebenenfalls verlorengehende Energie durch geringfügige Anhebung des $O_2$-Gehaltes über das stöchiometrische Maß von 1/2 $O_2$ pro Mol erzeugter Blausäure hinaus, eine leichte exotherme Reaktion hat und damit die Energie in das gesamte System hinein bringt, die durch Abwärme verloren wird. Als ein weiterer wesentlicher Vorteil des Verfahrens kann angeführt werden, daß der Einsatz von Luft als Sauerstoffquelle unproblematisch erfolgen kann, da die durch die Aufwärmung im Stickstoffballast gespeicherte Wärme direkt wieder rückgewonnen werden kann. Auch eine ggf. gewünschte weitere Verdünnung des Gasstroms durch weitere Inerte führt kaum zu einer Verschlechterung des energetischen Wirkungsgrades des Verfahrens.

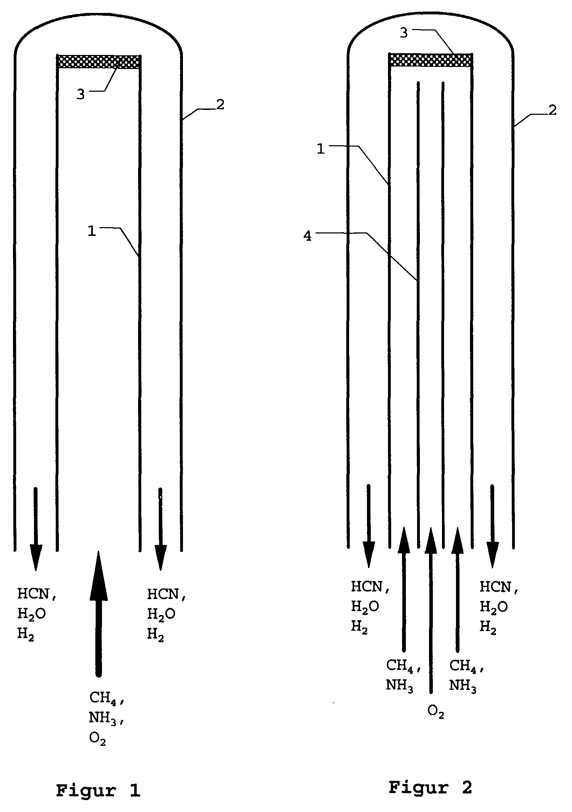

Das erfindungsgemäße Verfahren wird anhand der Figuren 1 bis 4 näher erläutert. Sie zeigen für das Verfahren geeignete Reaktoren. Es handelt sich um spezielle Ausführungsformen von Gegenstromreaktoren. Das erfindungsgemäße Verfahren ist jedoch nicht an die gezeigten Reaktoren gebunden. Vielmehr sind andere Reaktoren, insbesondere Gegenstromreaktoren, denkbar, die ebenfalls mit Erfolg eingesetzt werden können.

In den Figuren zeigen:

Figur 1     einen Längsschnitt durch eine schematische, vereinfachte Darstellung einer ersten Ausführungsform eines Reaktors zur Durchführung des erfindungsgemäßen Verfahrens;

Figur 2     einen Längsschnitt durch eine schematische, vereinfachte Darstellung einer zweiten Ausführungsform eines Reaktors zur Durchführung des erfindungsgemäßen Verfahrens;

Figur 3     einen Längsschnitt durch eine schematische, vereinfachte Darstellung einer dritten Ausführungsform eines Reaktors zur Durchführung des erfindungsgemäßen Verfahrens; und

Figur 4     einen Längsschnitt durch eine schematische, vereinfachte Darstellung einer vierten Ausführungsform eines Reaktors zur Durchführung des erfindungsgemäßen Verfahrens.

Figur 1 zeigt einen Umkehr-Gegenstromreaktor. Er besteht aus zwei koaxialen Rohren aus zum Beispiel gasdicht gesinterter Aluminiumoxidkeramik. Das Innenrohr 1 ist am oberen Ende mit einem Katalysatorbett 3 versehen. Das Außenrohr 2 ist am oberen Ende, dem Reaktorkopf, verschlossen. Wird zum Beispiel eine Eduktgasmischung von unten in das Innenrohr eingeführt, so passiert es den Katalysator am oberen Ende und wird dann in den ringförmigen Zwischenraum zwischen Innen- und Außenrohr nach unten umgelenkt.

Zum Starten der Umsetzung müssen Eduktgasmischung und Katalysator auf eine Temperatur von wenigstens 800°C erwärmt werden. Dies kann durch einen um das Außenrohr herumgelegten Heizmantel oder durch eine direkte Beheizung des Katalysators, z.B. durch Strom, geschehen. Alternativ kann auch eine Vorwärmung durch eine exotherme Reaktion, z.B. die Verbrennung von Wasserstoff am Katalysator erfolgen. Nach Zünden der Umsetzung reicht die frei werdende Reaktionswärme aus, um das Eduktgasgemisch auf die Reaktionstemperatur zu erwärmen. Gegebenenfalls kann das Volumenverhältnis von Sauerstoff zu Methan und Ammoniak den Erfordernissen des Prozesses angepaßt und/oder eine Abfuhr von Wärme aus dem System kompensiert werden.

Durch den Wärmeaustausch zwischen Produktgasgemisch und den Eduktgasen im Gegenstrom weist der Reaktor am Gaseinlaß und am Gasauslaß sehr niedrige Temperaturen von unter 200°C auf.

Figur 2 zeigt eine weitere mögliche Ausführungsform eines für das erfindungsgemäße Verfahren zu verwendenden Reaktors. In das Innenrohr 1 ist ein weiteres Rohr 4 bis kurz unter das Katalysatorbett geführt. Durch dieses zusätzliche Rohr wird Sauerstoff, beziehungsweise Luft, von Methan und Ammoniak getrennt dem Katalysator zugeführt. Das vermindert die Explosionsgefahr und erhöht damit die Betriebssicherheit des Verfahrens erheblich. Erst kurz vor dem Kontakt mit dem Katalysator wird der sauerstoffhaltige Gasstrom dem Strom aus Methan und Ammoniak zugemischt.

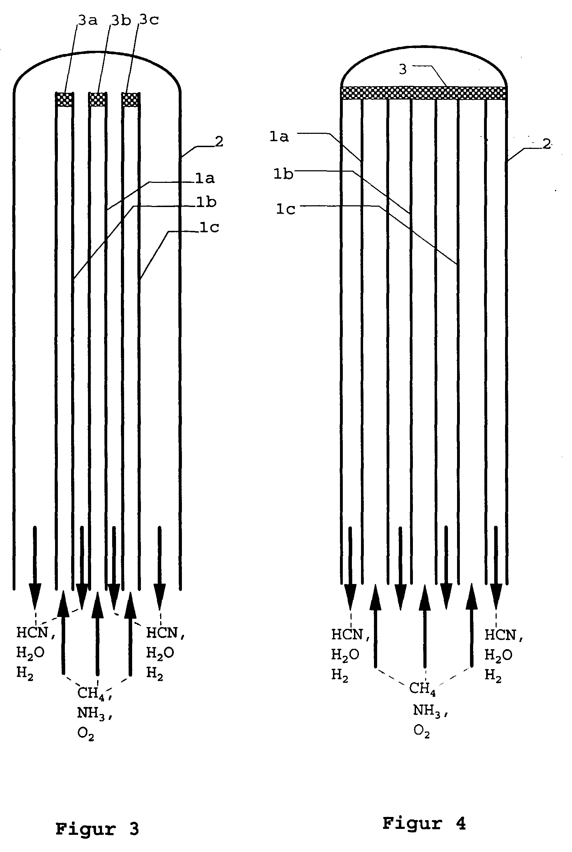

Figur 3 zeigt noch eine weitere mögliche Ausführungsform eines für das Verfahren gemäß der Erfindung einsetzbaren Reaktors. Es sind mehrere Innenrohre 1a,b,c zu einem Bündel von Innenrohren zusammengefaßt. Jedes einzelne Innenrohr 1a, 1b, 1c hat an seinem dem Reaktorkopf zugewendeten Ende ein Katalysatorbett 3a, 3b bzw. 3c. Die Eduktgase werden in jedes Innenrohr 1a, 1b, 1c eingeströmt und können nach der Umlenkung am Reaktorkopf sowohl zwischen den Rohren 1a, 1b und 1c als auch im Raum zwischen dem äußeren Rohr 2 und den Innenrohren 1a, 1b, 1c zurückströmen. Hierdurch wird ein sehr guter Wärmetausch zwischen Eduktgasen und Produktgasen möglich.

Eine weitere Abwandlung eines geeigneten Reaktors zeigt Figur 4. In dieser Ausführungsform münden die dargestellten Reaktionsrohre 1a, 1b und 1c in ein gemeinsames, größeres Katalysatorbett 3. Die Produktgase können entweder zwischen Außenrohr 2 und den Rohren 1 zurückströmen, es besteht jedoch auch die Möglichkeit, daß die Reaktionsgase nach erneutem Kontakt mit dem Katalysatorbett 3 und Durchgang durch die Schüttung 3 im Raum zwischen den Rohren 1a, 1b, 1c zurückströmen.

**Beispiel 1:**

Der Reaktor nach Figur 1 wurde zur Herstellung von Blausäure nach dem erfindungsgemäßen Verfahren eingesetzt. Das Außenrohr des Reaktors hatte einen Durchmesser von 50 und das Innenrohr von 35 mm. Die Länge des Reaktors betrug 700 mm. Der Reaktor war nach außen durch Keramikschäume thermisch isoliert. Als Katalysator wurde eine 5 mm dicke Katalysatorpackung aus einem feinen Drahtgeflecht einer Platin/Rhodium-Legierung entsprechend der US-Patentschrift US 3,360,335 verwendet.

Die Reaktorrohre bestanden aus gasdichter Aluminiumoxidkeramik. Der Reaktor wurde durch eine elektrische Beheizung auf 800°C vorgewärmt. Dann wurde in das Innenrohr 1 von unten ein Gasgemisch aus Methan und Sauerstoff (aus Luft) mit einem Volumenverhältnis von 1:1 eingeführt und die Temperatur des Reaktors auf 1000°C erhöht. Bei dieser Temperatur wurde Ammoniak zugegeben und so die Reaktion begonnen. Zusätzlich wurde die eingespeiste Luftmenge reduziert, bis eine autotherme Reaktionsführung gegeben war. Das war bei einem Verhältnis von Methan zu Ammoniak zu Sauerstoff von etwa 1:1:0,65 gegeben. Der Massenstrom von Ammoniak betrug 800 mmol/h.

Die Umsetzung zündete ohne Probleme. Zur Analyse des Produktgasgemisches wurde es durch einen Wäscher mit 25%iger Natronlauge geleitet und der Gyanidgehalt durch argentometrische Titration bestimmt.

Es wurde eine Ausbeute an Blausäure von 58%, bezogen auf Ammoniak, ermittelt.

**Vergleichsbeispiel 2:**

Beispiel 1 wurde wiederholt, jedoch wurde das Eduktgasgemisch in den Ringraum zwischen Innen- und Außenrohr eingespeist. Die Zündung der Reaktion erfolgte explosionsartig. Der Reaktor wurde zerstört.

**Beispiel 3:**

Für die weiteren Beispiele wurde der Reaktor nach Figur 2 verwendet, der die getrennte Zuführung und Aufheizung von Luftsauerstoff einerseits und Methan und Ammoniak andererseits ermöglicht. Der Luftsauerstoff wurde dabei wie in Figur 2 gezeigt, dem innersten Rohr zugeführt. Der Reaktor wurde wie in Beispiel 1 beschrieben angefahren und auf eine Temperatur von 1000°C eingestellt. Das Verhältnis von Ammoniak zu Methan zu Sauerstoff betrug 1:1:0,66.

Die Volumenverhältnisse der verschiedenen Gase wurden wie in Beispiel 1 gewählt. Es wurde eine Blausäure-Ausbeute von 54%, bezogen auf Ammoniak, bestimmt.

**Beispiel 4:**

Beispiel 3 wurde wiederholt, jedoch wurde eine Temperatur von 1100°C bei einem Volumenstrom von 2 mol/h Ammoniak eingestellt. Das Verhältnis von Ammoniak zu Methan zu Sauerstoff betrug 1:1:0,68.

Es wurde eine Ausbeute an Blausäure von 62%, bezogen auf Ammoniak, ermittelt.

**Beispiel 5:**

Beispiel 3 wurde wiederholt, jedoch wurde bei einer Temperatur von 1200°C ein Volumenstrom von 5 mol/h Ammoniak eingestellt. Das Verhältnis von Ammoniak zu Methan zu Sauerstoff betrug 1:1:0,64. Der besonders niedrige Wert beim Sauerstoff wird auf eine besonders gute Isolation des Reaktors zurückgeführt.

Die gemessen Blausäure-Ausbeute betrug 65%.

**Patentansprüche**

1. Verfahren zur Herstellung von Blausäure durch Umsetzen der Eduktgase Methan, Ammoniak und Sauerstoff an einem Katalysator bei erhöhter Temperatur,
   **dadurch gekennzeichnet,**
   daß man die Reaktion im wesentlichen autotherm unter Erhalt von Blausäure, Wasserstoff und Wasser führt.

2. Verfahren nach Anspruch 1,
   **dadurch gekennzeichnet,**
   daß man die Reaktion durch Veränderung der Sauerstoffzufuhr so steuert, daß die Wärmetönung der Umsetzung thermische Leckagen des Reaktors kompensiert.

3. Verfahren nach Anspruch 1 oder 2,
   **dadurch gekennzeichnet,**
   daß man pro Mol entstehende Blausäure zwischen 1/2 und < 3/2 Mol Sauerstoff einsetzt.

4. Verfahren nach Anspruch 1 oder 2,
   **dadurch gekennzeichnet,**
   daß man pro Mol entstehende Blausäure 1/2 bis 1 Mol $O_2$ einsetzt.

5. Verfahren nach Anspruch 1 oder 2,
   **dadurch gekennzeichnet,**
   daß man pro Mol entstehende Blausäure 1/2 bis 2/3 Mol $O_2$ einsetzt.

6. Verfahren nach Anspruch 1 oder 2,
   **dadurch gekennzeichnet,**

daß man die Umsetzung im wesentlichen gemäß der Reaktionsgleichung

$$CH_4 + NH_3 + 1/2\ O_2 \rightarrow HCN + H_2O + 2H_2$$

führt.

7. Verfahren nach einem oder mehreren der vorhergehenden Ansprüche,
**dadurch gekennzeichnet,**
daß man die bei der Reaktion bei hohen Temperaturen in den Gasen enthaltene Wärme im indirekten Wärmetausch nach dem Gegenstromprinzip zur Erwärmung der Eduktgase auf die erforderliche Reaktionstemperatur verwendet.

8. Verfahren nach einem oder mehreren der vorhergehenden Ansprüche,
**dadurch gekennzeichnet,**
daß die Eduktgase als Gasgemisch auf die erforderliche Reaktionstemperatur erwärmt werden.

9. Verfahren nach einem oder mehreren der vorangehenden Ansprüche 1 bis 7,
**dadurch gekennzeichnet,**
daß Sauerstoff einerseits und Methan und Ammoniak andererseits getrennt auf die erforderliche Reaktionstemperatur erwärmt werden.

10. Verfahren nach Anspruch 8 oder 9,
**dadurch gekennzeichnet,**
daß der Sauerstoff in Form von Luftsauerstoff bereitgestellt wird.

11. Verfahren nach Anspruch 4
**dadurch gekennzeichnet,**
daß zusätzlicher Stickstoff als Ballastgas dem Eduktgasgemisch beigemischt wird und/oder überschüssige Reaktionswärme aus dem Eduktgasgemisch entfernt wird.

Figur 1

Figur 2

**Figur 3**

**Figur 4**

8

Europäisches
Patentamt

**EUROPÄISCHER RECHERCHENBERICHT**

Nummer der Anmeldung

EP 99 10 3461

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | BOCKHOLT A ET AL: "HYDROGEN CYANIDE SYNTHESIS ON POLYCRYSTALLINE PLATINUM AND 90: 10 PLATINUM-RHODIUM SURFACES" JOURNAL OF THE CHEMICAL SOCIETY. FARADAY TRANSACTIONS, Bd. 93, Nr. 21, 7. November 1997, Seiten 3869-3878, XP000704297 * Seite 3869, linke Spalte; Seite 3871, Rechte Spalte * --- | 1-11 | C01C3/02 |
| X | P.W. SHERWOOD: "Synthesis of hydrogen cyanide by autothermal reaction." THE PETROLEUM ENGINEER, Bd. 31, Nr. 2, 1959, Seite 22,23,26 XP002106235 Dallas (US) * Seite C-26, linke Spalte * --- | 1-3 | |
| X | WO 97 46315 A (DU PONT ;CORBIN DAVID RICHARD (US); FELIX VINCI MARTINEZ (US)) 11. Dezember 1997 * Seite 7, Zeile 21 - Zeile 38 * --- | 1,6 | RECHERCHIERTE SACHGEBIETE (Int.Cl.6) |
| A | CHEMICAL ABSTRACTS, vol. 121, no. 14, 3. Oktober 1994 Columbus, Ohio, US; abstract no. 160254, G.I. GRIN: "Effect of nitrogen additions on the yield of hydrogen cyanide forming during oxidative ammonolysis of methane." Seite 160; XP002106236 * Zusammenfassung * & ZH. PRIKL. KHIM., Bd. 66, Nr. 9, 1993, Seiten 2025-2030, --- | 11 | C01C |
| A | WO 97 09273 A (ICI PLC ;COWELL CHRISTOPHER (GB); DOY RALPH (GB)) 13. März 1997 --- -/-- | | |

Der vorliegende Recherchenbericht wurde für alle Patentansprüche erstellt

| Recherchenort | Abschlußdatum der Recherche | Prüfer |
|---|---|---|
| DEN HAAG | 18. Juni 1999 | Zalm, W |

EPO FORM 1503 03.82 (P04C03)

EP 0 941 965 A1

**Europäisches Patentamt**

**EUROPÄISCHER RECHERCHENBERICHT**

**Nummer der Anmeldung**

EP 99 10 3461

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | DE 10 77 197 B (TOYO KOATSU) | | |

RECHERCHIERTE
SACHGEBIETE (Int.Cl.6)

Der vorliegende Recherchenbericht wurde für alle Patentansprüche erstellt

| Recherchenort | Abschlußdatum der Recherche | Prüfer |
|---|---|---|
| DEN HAAG | 18. Juni 1999 | Zalm, W |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

.....................................................................................
& : Mitglied der gleichen Patentfamilie, übereinstimmendes
    Dokument

EPO FORM 1503 03.82 (P04C03)

10

**ANHANG ZUM EUROPÄISCHEN RECHERCHENBERICHT**
**ÜBER DIE EUROPÄISCHE PATENTANMELDUNG NR.**

EP 99 10 3461

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

18-06-1999

| Im Recherchenbericht angeführtes Patentdokument | Datum der Veröffentlichung | Mitglied(er) der Patentfamilie | Datum der Veröffentlichung |
|---|---|---|---|
| WO 9746315 A | 11-12-1997 | EP 0902725 A | 24-03-1999 |
| WO 9709273 A | 13-03-1997 | AU 702825 B<br>AU 6879996 A<br>BR 9610149 A<br>CN 1200102 A<br>EP 0847372 A | 04-03-1999<br>27-03-1997<br>02-02-1999<br>25-11-1998<br>17-06-1998 |
| DE 1077197 B | | KEINE | |

EPO FORM P0461

Für nähere Einzelheiten zu diesem Anhang : siehe Amtsblatt des Europäischen Patentamts.Nr.12/82